# EUROPÄISCHE PATENTSCHRIFT

(11) **EP 2 501 590 B1**
(45) Veröffentlichungstag und Bekanntmachung des Hinweises auf die Patenterteilung: **17.07.2013**
(21) Anmeldenummer: 10773012.9
(22) Anmeldetag: 18.10.2010
(51) Int. Cl.: B60S 1/38

(54) **WISCHBLATT IN FLACHBALKENBAUWEISE**
WIPER BLADE OF FLAT BEAM CONSTRUCTION
BALAI D'ESSUIE-GLACE EN FORME DE BARRE PLATE

(30) Priorität: 17.11.2009 DE 102009046776
(43) Veröffentlichungstag der Anmeldung: 26.09.2012
(73) Patentinhaber: Robert Bosch GmbH, 70442 Stuttgart (DE)
(72) Erfinder: Benner, Andreas, 77830 Buehlertal (DE); WESTERMANN, Klaus-Juergen, 76332 Bad Herrenalb (DE)
(86) Internationale Anmeldenummer: PCT/EP2010/065583
(87) Internationale Veröffentlichungsnummer: WO 2011/061023

(56) Entgegenhaltungen:
- DE-A1- 10 058 208
- DE-T2-602004 008 210
- FR-A1- 2 879 987
- US-A1- 2007 113 366

## Beschreibung

### Stand der Technik

Die Erfindung geht von einem Wischblatt in Flachbalkenbauweise nach dem Oberbegriff des Anspruchs 1 aus.

Aus der DE 100 58 208 A1 ist ein gattungsgemäßes Wischblatt bekannt, bei dem im mittleren Bereich ein Anschlusselement aus einem geeigneten Werkstoff, z.B. aus Kunststoff, auf zwei parallel verlaufenden Federschienen befestigt ist, die als Tragelement dienen. Das Anschlusselement besitzt an den Längsseiten Führungsprofile, mit denen es die Federschienen von den äußeren Längsseiten aus oben und unten sowie an den Längsseiten selbst umfasst. Zwischen den beiden Federschienen ist ein sich an dem Verbindungselement abstützendes Fixierelement vorhanden, das die Federschienen form- und/oder kraftschlüssig fixiert. Als Fixierelement ist ein Stift vorgesehen, der etwa senkrecht zur Breitseite der Federschienen in einer Bohrung des Anschlusselements geführt ist und die Federschienen nach außen kraftschlüssig gegen die Führungsprofile des Anschlusselements drückt. Bei einigen Ausgestaltungen kann der Stift auch in Aussparungen an den Innenseiten der Federschienen eingreifen, wodurch zusätzlich oder anstelle des Kraftschlusses ein Formschluss erzielt wird. Der Formschluss kann zudem dadurch verstärkt werden, dass an den Außenseiten der Federschienen ebenfalls Aussparungen vorgesehen sind, in die Überstände im Bereich des Führungsprofils eingreifen. Der Fixierstift wird bei der Montage in seiner Führung, z.B. durch eine Presspassung, durch Kleben, Löten, Verschweißen, Verstemmen, Verpressen, Verschrauben oder dgl., in seiner axialen Lage gesichert.

### Offenbarung der Erfindung

Erfindungsgemäß ist ein Wischblatt mit der Merkmalen des Anspruchs 1 vorgesehen. Nach der Erfindung weist das Fixierelement des gattungsgemäßen Wischblattes ein u-förmiges Querschnittprofil mit zwei durch einen Boden miteinander verbundenen Seitenwänden auf, die in Nischen an den Innenseiten der Seitenwände des Anschlusselements eingelassen sind, wobei der Boden des Fixierelements parallel zum Boden des Anschlusselements verläuft und in Verlängerung der Seitenwände des Fixierelements auf die Federschiene zu mit den Seitenwänden Laschen verbunden sind, die durch Öffnungen im Boden des Anschlusselements in die Aussparungen der Federschiene eingreifen.

Das erfindungsgemäße Wischblatt mit dem Anschlusselement und dessen Fixierelement bildet ein einfaches Stecksystem, bei dem die Montage durch einfache Handgriffe in kurzer Zeit durchgeführt werden kann. Ferner wird durch die vereinfachte Montage das Risiko von Fehlmontagen gesenkt. Das Fixierelement selbst ist ein formstabiles Bauelement, das die auf ihn einwirkenden Kräfte großflächig und spielfrei auf das Anschlusselement überträgt. Die für den Verschleiß relevanten Flächenpressungen sind sehr gering. Es kann daher weitere Funktionen übernehmen, z.B. kann es Lagerelemente für die Gelenkverbindung mit einem Wischarm aufnehmen. Hierzu weist das Fixierelement vorteilhafterweise in seinen Seitenwänden Bohrungen auf, die als Nabe oder zur Aufnahme einer Gelenkachse dienen. Wird die Gelenkachse in den Seitenwänden des Fixierelements eingenietet, weist das Anschlusselement im Bereich der nach außen vorstehenden Nietköpfe Aussparungen auf, in die die Nietköpfe bei der Montage eingreifen. Um das Fixierelement im Anschlusselement zu verankern, wird es annähernd spielfrei in die Nischen des Anschlusselements eingeklippst oder von offenen Seiten der Nische, die von der Wischleiste abgewandt liegen, eingesetzt und durch Rastnasen in den Nischen der Seitenwände verrastet, die in Rastöffnungen der Seitenwände des Fixierelements bei der Montage einrasten.

Grundsätzlich können das Anschlusselement und das Fixierelement aus Kunststoff hergestellt werden. Zweckmäßigerweise wird das Fixierelement allerdings aus Metall gefertigt, um eine größere Festigkeit, Stabilität und Lebensdauer zu erzielen. Dadurch wird über die Lebensdauer des Wischblatts eine gute Seitenführung und hohe Wischqualität gewährleistet. In vorteilhafter Weise wird das Fixierelement aus Metall mit einem Anschlusselement aus Kunststoff kombiniert.

Dabei ist das Fixierelement zweckmäßigerweise ein Blechbiegeteil, wobei die Laschen aus dem Boden ausgeklinkt und in die Ebenen der Seitenwände gebogen sind. Dabei entsteht in dem Boden des Fixierelements ein Durchbruch, der den ausgeklinkten Laschen entspricht.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

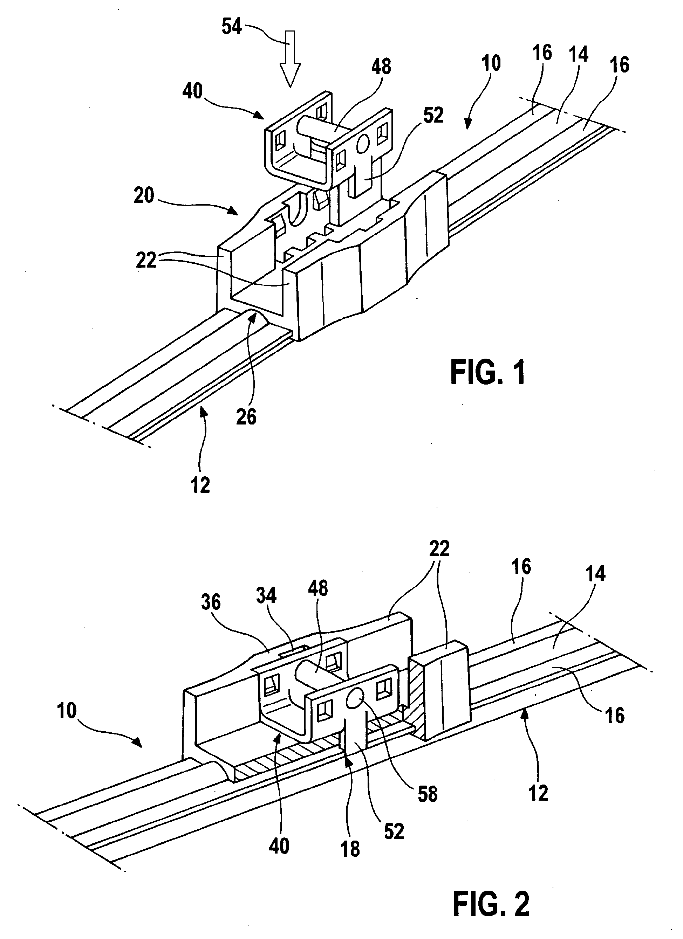

Fig. 1 eine perspektivische Teilansicht eines erfindungsgemäßen Wischblatts mit einem Anschlusselement während der Montage eines Fixierelements,
Fig. 2 eine perspektivische, teilweise geschnittene Teilansicht eines Wischblatts nach Fig. 1 mit einem montierten Fixierelement,

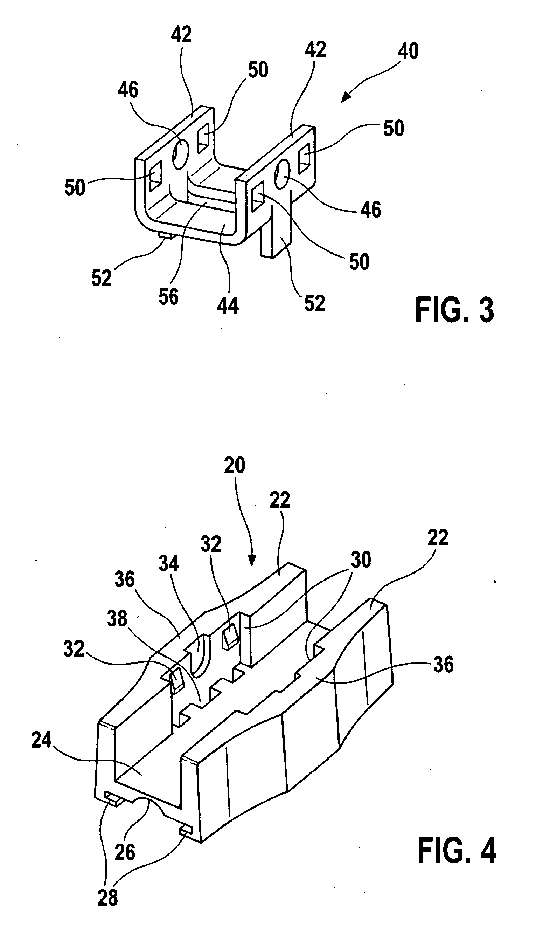

Fig. 3 eine perspektivische Ansicht eines Fixierelements und
Fig. 4 eine perspektivische Ansicht eines Anschlusselements.

Ein Wischblatt 10 besitzt im Wesentlichen eine Wischleiste 12, deren Rückenleiste 14 von zwei Federschienen 16 gehalten wird, die als Tragelement unterhalb der Rückenleiste 14 in nicht näher dargestellte Längsnuten der Wischleiste 12 eingreifen. Es sind auch Lösungen mit einer Federschiene 16 möglich, die in der Regel in einem Längskanal der Wischleiste 12 untergebracht ist. Im mittleren Bereich des Wischblatts 10 ist auf den Federschienen 16 ein Anschlusselement 20 befestigt, das zur gelenkigen Verbindung des Wischblatts 10 mit einem nicht dargestellten Wischarm dient.

Das Anschlusselement 20 besitzt zwei Seitenwände 22, die zu den Federschienen 16 hin Führungsprofile 28 besitzen. Diese umfassen in montiertem Zustand die Federschienen 16 seitlich von unten und von oben. Die beiden Seitenwände 22 des Anschlusselements 20 sind oberhalb der Führungsprofile 28 durch einen Boden 24 miteinander verbunden. Dieser weist zur Wischleiste 12 hin eine Längsnut 26 auf, die der Rückenleiste 14 ausreichend Platz bietet.

An den Innenseiten der Seitenwände 22 des Anschlusselements 20 sind Nischen 30 vorgesehen, die zu der von der Wischleiste 12 abgewandten Seite hin offen sind, und die an ihren Innenseiten Rastnasen 32 aufweisen. Bei der Montage in Montagerichtung 54 wird von den offenen Seiten der Nischen 30 ein Fixierelement 40 eingesetzt, dessen Seitenwände 42 durch einen Boden 44 miteinander verbunden sind. Die Seitenwände 42 sind in den Nischen 30 des Anschlusselements 20 nahezu spielfrei geführt. In Verlängerung der Seitenwände 42 auf die Federschienen 16 zu sind an den Seitenwänden 42 Laschen 52 angeformt, die durch Öffnungen 38 im Boden 24 des Anschlusselements 20 geführt sind und in Aussparungen 18 eingreifen, die an den Außenseiten der Federschienen 16 einander gegenüberliegend angeordnet sind. Durch die Aussparungen 18 wird die Montageposition des Anschlusselements 20 definiert. Dabei ist es möglich, dass mehrere Aussparungen 18 in Längsrichtung versetzt vorgesehen sind, sodass bei dem gleichen Wischblatt 10 nach Anwendungsfall verschiedene Montagepositionen des Anschlusselements 20 möglich sind. Um die Stabilität der Seitenwände 22 im Bereich der Nischen 30 zu gewährleisten, sind die Seitenwände 22 in diesem Bereich durch Verdickungen 36 verstärkt.

Das Fixierelement 40 besitzt in seinen Seitenwänden Rastöffnungen 50, die mit den Rastnasen 32 in den Nischen 30 der Seitenwände 22 des Anschlusselements 20 zusammenwirken, sodass das Fixierelement 40 mit dem Anschlusselement 20 in der montierten Position verrastet ist. Somit ist das Anschlusselement 20 durch die Führungsprofile 28 in Richtung einer Hochachse und quer zur Längsrichtung des Wischblatts 10 fixiert, während das Fixierelement 40 die Sicherung des Anschlusselements 20 in Längsrichtung des Wischblatts 10 übernimmt.

Das Fixierelement 40 kann weitere Funktionen übernehmen, z.B. kann es Lagerelemente für die gelenkige Verbindung mit dem Wischarm aufnehmen. Hierzu weist das Fixierelement 40 in seinen Seitenwänden 42 Bohrungen 46 auf, die als Naben für eine Gelenkverbindung dienen können oder in denen eine Gelenkachse 48 befestigt ist. Diese wird zweckmäßigerweise mit den Seitenwänden 42 vernietet, wobei die nach außen vorstehenden Nietköpfe 58 in Aussparungen 34 der Nischen 30 des Anschlusselements 20 Platz finden.

Grundsätzlich kann das Fixierelement 40 aus einem beliebigen geeigneten Werksstoff bestehen. Aus Festigungsgründen, Fertigungsgründen und Stabilitätsgründen ist es zweckmäßig, dass das Fixierelement 40 ein Metallteil ist. Hierbei kann es sich um ein Blechteil, ein Zamakteil, Magnesiumdruckgussteil oder ein Drahtgebilde handeln. Das Blechteil wird zweckmäßigerweise in einem Stanzbiegeverfahren hergestellt, wobei die Laschen aus dem Boden ausgeklinkt und in die Ebenen der Seitenwände 42 gebogen sind. Der dadurch entstehende Durchbruch im Boden 44 ist mit 56 bezeichnet.

## Patentansprüche

1. Wischblatt (10) in Flachbalkenbauweise mit einem Tragelement in Form mindestens einer vorgebogen Federschiene (16), an der im mittleren Bereich ein Anschlusselement (20) zum gelenkigen Verbinden mit einem Wischarm befestigt ist, wobei das Anschlusselement (20) zwei Seitenwände (22) mit einander zugewandten, offenen Führungsprofilen (28) für die Federschiene (16) besitzt, die Seitenwände (22) durch einen quer verlaufenden Boden (24) mitein-ander verbunden sind und das Anschlusselement (20) durch ein Fixierelement (40) in Längsrichtung relativ zur Federschiene (16) fixiert ist, wobei das Fixierelement (40) in Aussparungen (34) an den äußeren Längsseiten der Federschiene (16) eingreift, **dadurch gekennzeichnet, dass** das Fixierelement (40) ein u-förmiges Querschnittprofil mit zwei durch einen Boden (44) miteinander verbundenen Seitenwänden (42) aufweist, die in Nischen (30) an den Innenseiten der Seitenwände (22) des Anschlusselements (20) eingelassen sind, wobei der Boden (44) des Fixierelements (40) parallel zum Boden (24) des Anschlusselements (20) verläuft, und in Verlängerung der Seitenwände (42) des Fixierelements (40) auf die Federschiene (16) zu mit den Seitenwänden (42) Laschen (52) verbunden sind, die durch Öffnungen (38) im Boden (24) des Anschlusselements (20) in die Aussparungen (34) der Federschiene (16) eingreifen.

2. Wischblatt (10) nach Anspruch 1, **dadurch gekennzeichnet, dass** die Laschen (52) an den Seitenwänden (42) des Fixierelements (40) angeformt sind.

3. Wischblatt (10) nach einem der Ansprüche 1 oder 2, **dadurch gekennzeichnet, dass** das Fixierelement (40) in seinen Seitenwänden (42) Bohrungen (46) aufweist, die als Nabe oder zur Aufnahme einer Gelenkachse (48) dienen.

4. Wischblatt (10) nach Anspruch 3, **dadurch gekennzeichnet, dass** die Gelenkachse (48) in den Seitenwänden (42) des Fixierelements (40) eingenietet ist und die nach außen vorstehenden Nietköpfe in Aussparungen (34) in den Nischen (30) des Anschlusselements (20) eingreifen.

5. Wischblatt (10) nach einem der vorhergehenden Ansprüche, **dadurch gekennzeichnet, dass** in den Seitenwänden (42) des Fixierelements (40) Rastöffnungen (50) vorgesehen sind, die mit Rastnasen (32) in den Nischen (30) der Seitenwände (22) des Anschlusselements (20) zusammenwirken.

6. Wischblatt (10) nach einem der vorhergehenden Ansprüche, **dadurch gekennzeichnet, dass** das Fixierelement aus Metall gefertigt ist.

7. Wischblatt (10) nach Anspruch 6, **dadurch gekennzeichnet, dass** das Fixierelement (40) ein Blechbiegeteil ist, wobei die Laschen (52) aus dem Boden (44) ausgeklinkt und in die Ebenen der Seitenwände (42) gebogen sind.

8. Wischblatt (10) nach einem der vorhergehenden Ansprüche, **dadurch gekennzeichnet, dass** an den äußeren Längsseiten der Federschiene (16) mehrere Aussparungen (18) in Längsrichtung versetzt zueinander angeordnet sind, die unterschiedliche Fixierpunkte des Anschlusselements (20) definieren.

## Claims

1. Wiper blade (10) of flat beam construction with a supporting element in the form of at least one pre-bent spring rail (16), to which a connecting element (20) for the articulated connection to a wiper arm is fastened in the central region, wherein the connecting element (20) has two side walls (22) with mutually facing, open guide profiles (28) for the spring rail (16), the side walls (22) are connected to each other by a transversely running base (24), and the connecting element (20) is fixed in the longitudinal direction relative to the spring rail (16) by a fixing element (40), wherein the fixing element (40) engages in cutouts (34) on the outer longitudinal sides of the spring rail (16), **characterized in that** the fixing element (40) has a U-shaped cross-sectional profile with two side walls (42) which are interconnected by a base (44) and are embedded in recesses (30) on the inner sides of the side walls (22) of the connecting element (20), wherein the base (44) of the fixing element (40) runs parallel to the base (24) of the connecting element (20), and, in an extension of the side walls (42) of the fixing element (40) towards the spring rail (16), tabs (52) are connected to the side walls (42), the tabs engaging in the cutouts (34) of the spring rail (16) through openings (38) in the base (24) of the connecting element (20).

2. Wiper blade (10) according to Claim 1, **characterized in that** the tabs (52) are integrally formed on the side walls (42) of the fixing element (40).

3. Wiper blade (10) according to either of Claims 1 and 2, **characterized in that** the side walls (42) of the fixing element (40) have bores (46) which serve as a hub or to receive a hinge pin (48).

4. Wiper blade (10) according to Claim 3, **characterized in that** the hinge pin (48) is riveted into the side walls (42) of the fixing element (40) and the outwardly projecting rivet heads engage in cutouts (34) in the recesses (30) of the connecting element (20).

5. Wiper blade (10) according to one of the preceding claims, **characterized in that** the side walls (42) of the fixing element (40) are provided with latching openings (50) which interact with latching lugs (32) in the recesses (30) of the side walls (22) of the connecting element (20).

6. Wiper blade (10) according to one of the preceding claims, **characterized in that** the fixing element is manufactured from metal.

7. Wiper blade (10) according to Claim 6, **characterized in that** the fixing element (40) is a bent sheet-metal part, wherein the tabs (52) are disengaged from the base (44) and are bent into the planes of the side walls (42).

8. Wiper blade (10) according to one of the preceding claims, **characterized in that** a plurality of cutouts (18) are arranged offset from one another in the longitudinal direction on the outer longitudinal sides of the spring rail (16), said cutouts defining different fixing points of the connecting element (20).

## Revendications

1. Balai d'essuie-glace (10) en forme de barre plate avec un élément de support prenant la forme d'au moins un rail sous ressort (16) incurvé vers l'avant au niveau duquel, dans la zone centrale, un élément de raccordement (20) est fixé à un bras d'essuyage pour réaliser une jonction articulée, l'élément de raccordement (20) possédant deux parois latérales (22) avec des profilés de guidage (28) ouverts orientés l'un vers l'autre pour le rail sous ressort (16), les parois latérales (22) étant reliées l'une à l'autre par un fond (24) s'étendant transversalement et l'élément de raccordement (20) étant fixé dans la direction longitudinale par rapport au rail sous ressort (16) par le biais d'un élément de fixation (40), l'élément de fixation (40) s'emboîtant dans les évidements (34) au niveau des côtés longitudinaux extérieurs du rail sous ressort (16), **caractérisé en ce que** l'élément de fixation (40) comporte un profilé de section transversale en forme d'u doté de deux parois latérales (42) reliées entre elles par un fond (44) encastrées dans des niches (30) prévues au niveau des côtés intérieurs des parois latérales (22) de l'élément de raccordement (20), le fond (44) de l'élément de fixation (40) s'étendant parallèlement au fond (24) de l'élément de raccordement (20) et des brides (52) étant reliées aux parois latérales (42) dans le prolongement des parois latérales (42) de l'élément de fixation (40) prévu sur le rail sous ressort (16), lesdites brides s'emboîtant à travers les ouvertures (38) dans le fond (24) de l'élément de raccordement (20), dans les évidements (34) du rail sous ressort (16).

2. Balai d'essuie-glace (10) selon la revendication 1, **caractérisé en ce que** les brides (52) sont moulées au niveau des parois latérales (42) de l'élément de fixation (40).

3. Balai d'essuie-glace (10) selon l'une quelconque des revendications 1 ou 2, **caractérisé en ce que** l'élément de fixation (40) comporte des alésages (46) dans ses parois latérales (42), lesdits alésages servant de moyeu ou de logement à un axe articulé (48).

4. Balai d'essuie-glace (10) selon la revendication 3, **caractérisé en ce que** l'axe articulé (48) est riveté dans les parois latérales (42) de l'élément de fixation (40) et que les têtes de rivet saillant vers l'extérieur s'emboîtent dans les évidements (34) prévus dans les niches (30) de l'élément de raccordement (20).

5. Balai d'essuie-glace (10) selon l'une quelconque des revendications précédentes, **caractérisé en ce que** des ouvertures d'arrêt (50) sont prévues dans les parois latérales (42) de l'élément de fixation (40) et qu'elles interagissent avec les becs d'arrêt (32) prévus dans les niches (30) des parois latérales (22) de l'élément de raccordement (20).

6. Balai d'essuie-glace (10) selon l'une quelconque des revendications précédentes, **caractérisé en ce que** l'élément de fixation est fabriqué en métal.

7. Balai d'essuie-glace (10) selon la revendication 6, **caractérisé en ce que** l'élément de fixation (40) est une partie flexible en tôle, les brides (52) étant décrochées du fond (44) et incurvées dans les plans des parois latérales (42).

8. Balai d'essuie-glace (10) selon l'une quelconque des revendications précédentes, **caractérisé en ce que** plusieurs évidements (18) définissant différents points de fixation de l'élément de raccordement (20) sont disposés de façon décalée les uns par rapport aux autres dans la direction longitudinale au niveau des côtés longitudinaux extérieurs du rail sous ressort (16).
